Europäisches Patentamt

(19) European Patent Office

Office européen des brevets

(11) EP 0 809 582 B1

(12) # EUROPEAN PATENT SPECIFICATION

(45) Date of publication and mention
of the grant of the patent:
**07.07.1999 Bulletin 1999/27**

(51) Int. Cl.⁶: **B60R 22/46**

(86) International application number:
**PCT/GB96/00327**

(21) Application number: **96902367.0**

(22) Date of filing: **15.02.1996**

(87) International publication number:
**WO 96/25310 (22.08.1996 Gazette 1996/38)**

(54) **VEHICLE OCCUPANT RESTRAINT SYSTEM**

FAHRZEUGINSASSEN-RÜCKHALTESYSTEM

SYSTEME DE RETENUE D'UN PASSAGER DE VEHICULE

(84) Designated Contracting States:
**DE ES FR GB IT SE**

(30) Priority: **16.02.1995 GB 9503070**

(43) Date of publication of application:
**03.12.1997 Bulletin 1997/49**

(73) Proprietor: **Royal Ordnance plc**
**Euxton Chorley Lancashire PR7 6AD (GB)**

(72) Inventor: **HICKEY, Dennis, James**
**Lancashire PR4 5PA (GB)**

(74) Representative:
**Wildman, David Brian et al**
**Royal Ordnance plc**
**Patents & Licensing Department**
**Lancaster House**
**P.O. Box 87**
**Farnborough Aerospace Centre**
**Farnborough, Hants GU14 6YU (GB)**

(56) References cited:
**EP-A- 0 093 844**       **EP-A- 0 680 856**
**WO-A-95/27638**       **DE-A- 3 220 498**
**GB-A- 2 054 743**

• **AUTOMOTIVE ENGINEERING, vol. 89, no. 7, July**
**1981, DALLAS, TEXAS, USA, pages 79-80,**
**XP002002792 DAVID SCOTT: "OE Airbag**
**combined with seat belt tensioner"**

## Description

This invention relates to vehicle occupant restraint systems and more particularly to a seat belt pretensioner for taking up slack in a seat belt in the event of vehicle collision.

A typical inertia reel seat belt comprises a reel of webbing fitted at one end with a locking device that only functions if the reel spins too quickly. During a collision, standard inertia reel seat belts will typically allow 120 to 200 mm of slack before the locking mechanism functions. Devices which are more sensitive than this are impractical when the user unreels the belt to lock it into position in normal use. The delay in operation can allow the occupant to move out of the seat before being arrested and whilst this may avoid a fatality, it can lead to serious whiplash injuries.

Seat belt pretensioners are now widely used in vehicles to provide additional protection to the occupants in the event of a collision. They are normally connected to collision-sensing devices and use stored energy to wind in sufficient slack in the belt to lock the belt before the user can begin to move. The energy can be stored in the form of a spring or in a pyrotechnic gas-generating composition.

In a typical application, the function of the seat belt pretensioner is to rotate the seat belt retractor or take-up reel rapidly in a belt retraction direction to pull the belt against the vehicle occupant and eliminate slack in the belt. Many such pretensioner devices have been proposed, and exemplary of such prior art constructions are those disclosed in US-A-4178016, US-A-4789185 and US-A-5145209; EP-A-0480137; DE-A-3715845 and DE-A-3220498 and GB-A-2258603.

The technical requirements for a seat belt pretensioner are very numerous. Firstly it must not interfere with the normal operation of the inertia reel seat belt retractor. Secondly it must be capable of activation within a few milliseconds in order to provide adequate protection to the vehicle occupant in the event of a collision. Thirdly, vehicle manufacturers' specifications now require that the pretensioner should exert a force of 700 to 800 Newtons and retract the seat belt by a minimum of 100 mm and a maximum of 200 mm. Fourthly, after activation of the seat belt pretensioner, it should preferably not interfere with the normal operation of the inertia reel seat belt retractor, in the event that the vehicle can still be driven after the collision incident.

Further very important practical requirements are that the seat belt pretensioner should be highly compact, fit on to existing inertia reel seat belt systems and preferably fit the housing profile of existing equipment.

GB-A-2054743 describes a rotary power unit suitable for use in a seat belt pretensioner, the pretensioner comprising;

(i) An elongate pressure chamber;

(ii) a plurality of projectiles located in the pressure chamber;

(iii) gas generating means for generating a high-pressure gas within the pressure chamber so as to propel the projectiles along the pressure chamber; and

(iv) a drive surface upon which the projectiles impinge when propelled along the pressure chamber by the high-pressure gas, the drive surface being connected to, or comprising a part of a rotatable take-up reel of a vehicle seat belt retractor and arranged to be driven by the impinging projectiles so as to rotate the rotatable take-up reel in a belt retraction direction when impinged upon by the projectiles, so as, in operation, to take up slack in the seat belt webbing, and to pull the seat belt webbing against the vehicle occupant.

In the embodiments described in that document, on impingement onto the drive surface, the projectiles are held in contact with the drive surface by means of a lock and key type or gripping arrangement. Once held on the surface of the drive wheel, the motion of the projectiles is constrained to a path circumferential to the drive wheel and their continued momentum causes the drive wheel to rotate.

A disadvantage of this arrangement is the potential risk that a projectile, especially the first, may encounter the drive surface at a location between two individual recesses designed to receive the projectile or alternatively off centre of a gripping circumferential channel which could cause jamming or damage to the mechanism. In addition, such gripping means or lock and key type arrangements can be costly and due to the tolerances involved, awkward to manufacture.

An object of the present invention is to provide a pretensioner for a vehicle seat belt retractor which alleviates these disadvantages.

According to the present invention there is provided a pretensioner, for example, for an inertia reel seat belt, wherein the motive force is provided by a projectile impinging upon a drive surface, the drive surface comprising at least in part of a compliant material.

In one aspect of the invention, there is provided a pretensioner for a vehicle seat belt retractor of the type having a rotatable take-up reel on which seat belt webbing can be wound, which comprises:

(i) an elongate pressure chamber (2);

(ii) a plurality of projectiles (11) located in the pressure chamber;

(iii) gas generating means (5) for generating a high pressure gas within the pressure chamber;

(iv) a drive surface (12, 21, 25, 34, 41) upon which the projectiles impinge when acted upon by the high pressure gas, the drive surface being connected to, or comprising a part of, a rotatable take-up reel (2) of a vehicle seat belt retractor and arranged to be driven by the impinging projectiles (11) so as to rotate the rotatable take-up reel in a belt retraction direction when impinged upon by the projectiles, so as, in operation, to take up slack in the seat belt webbing, and to pull the seat belt webbing against the vehicle occupant; characterised in that; the drive wheel comprises compliant material (21; 27; 40) deformable by pressure contact between the drive surface and a projectile such that, when pressure contact occurs, the shortest distance from the point of contact of the projectile on the drive surface to the central axis of the drive wheel is reduced.

In one embodiment the drive wheel may comprise at least a circumferential surface layer of compliant material. In another embodiment the drive wheel may comprise a circumferential surface layer of rigid material, and radially inward thereof an annular layer of compliant material.

Suitable compliant materials include resilient material such as rubber, or plastics materials. In another alternative embodiment the drive wheel further comprises a circumferential channel having resiliently deformable channel sides, the spacing of the channel sides being such that a projectile can be received therebetween only by deforming the channel sides.

In another embodiment of a pretensioner according to the present invention, the drive surface comprises a surface, preferably a circumferential surface, of a wheel which is connected to, or comprises part of, the rotatable take-up reel of the vehicle seat belt retractor. The drive surface may additionally be indented, toothed, grooved, or otherwise shaped, to accept partial intrusion by the projectiles to provide assistance to the drive mechanism provided by the drive wheel. The drive surface may be formed with recesses each of which is adapted to receive a single projectile.

Preferably the projectiles impinge tangentially, or at a low angle of preferably not more than 10° against the drive surface in order to provide a maximum acceleration to the surface.

The pressure chamber preferably comprises an elongate, curved tube of circular cross-section, preferably of steel or other metal capable of withstanding the pressures involved, having an open end arranged in a tangential direction, or at a low angle, to the drive surface. The open end of the tube preferably terminates in an open channel which directs the projectiles against the drive surface. The open channel is preferably provided with a terminal arrest member, positioned so as to slow down the projectiles after they have left the drive surface.

The number of projectiles can be chosen in order to give the required retraction of the seat belt. Preferably there are at least 30, and preferably not more than 50 projectiles, and these are preferably sufficient to rotate the central shaft of the take-up reel by from one to three times, for example, twice, during the activation of the pretensioner. This will result in a compact device capable of optimum retraction effect.

In a preferred embodiment, for example, using a drive wheel and spherical projectiles (balls) which remain in contact one with the next during use, the number of projectiles will depend on <u>inter alia</u> (i) the diameter of the drive wheel or pulley, (ii) the number of required revolutions of the drive wheel, and (iii) the diameter of the projectiles (balls). If the diameter of the drive wheel is "D" the diameter of the projectiles is "d" and the number of revolutions is "N", then the number of balls is given by rounding up the result of applying the formula:

$$\frac{N\pi(D+d)}{d}1$$

In an example, N=2, D=50mm and d=10mm, giving a calculated result of 37.7, i.e. 38 balls.

Preferably the projectiles are not connected to each other, and most desirably they are spherical in form. This leads to a number of advantages. For example separate unconnected projectiles can be retained in a compact receptacle after actuation of the pretensioner; if they are linked together, a larger or longer receptacle would be required. Projectiles in the form of a row of discrete balls can also articulate more freely than, for example, a chain. The designer is thus provided with greater freedom to shape and position the elongate pressure chamber so as to render the overall design compact, e.g. by locating parts of the pressure chamber in positions which would otherwise be inconvenient and therefore not usable for this or any other purpose.

The projectiles are preferably spherical in shape. For example, the projectiles may comprise a series of metal balls, for example, ball bearings, which are arranged in a row in a tubular metal pressure chamber. The diameter of the metal balls is such as to occupy substantially the entire internal diameter of the tube, whilst allowing the balls to travel freely therein.

Advantageously, the pretensioner comprises an arcuate portion of the elongate tube which curves partly or wholly around the drive surface.

Advantageously the axis of the elongate tube is disposed in more than one plane. This can lead to a pretensioner of compact design, for example at least part of the elongate tube may be of helical form, and/or at least part of the elongate tube may be disposed within the take-up reel. Additionally, the gas generating means may be at least partly disposed within the take-up reel.

The end of the tube remote from the open end is preferably closed or capped, and a suitable gas-generating composition can be disposed therein. Such a gas-generating composition can comprise, for example, sodium azide, or a gas-generating composition comprising nitroguanidine, Alternatively, the gas-generating composition can be provided in a separate chamber connected to the pressure chamber. The gas-generating composition preferably comprises a pyrotechnic composition ignited by an electronic ignition system activated by a deceleration sensor.

After impinging on the drive surface, the projectiles are preferably collected in a collection chamber, or an open cavity, which can conveniently be the housing of the seat belt retractor. The collection chamber or cavity is preferably provided with a clear panel through which the projectiles can be viewed, to provide a functional check on the device.

Preferably retaining means are provided for retaining the projectiles in the pressure chamber. Such retaining means may comprise, for example, a rigid foam which is injected into the pressure chamber after the projectiles have been inserted therein.

The period of activation of the pretensioner is preferably around 20 milliseconds, and the pretensioner is preferably designed to wind in from 120 to 200 mm of seat belt (depending on the amount left on the take-up reel) and cause the belt to lock.

Preferably when the projectiles are positioned in the collection chamber they provide no impediment or obstacle to the normal operation of the seat belt, so that after a collision and subsequent actuation of the pretensioner the vehicle occupant does not continue to be held firmly against the seat. The occupant can thus more readily get out of the vehicle, or continue to drive if possible.

Embodiments of the invention will now be described with reference to and as illustrated in the accompanying drawings in which:

Figure 1 shows a seat belt pretensioner drive mechanism according to the invention in side elevation;

Figure 2 shows the pretensioner of Figure 1 in top elevation;

Figure 3 shows an embodiment of the pretensioner of Figures 1 and 2 in side elevation in an enlarged scale with parts broken away to illustrate the toothed or grooved aspect of the drive surface;

Figure 4 shows the pretensioner of Figure 3 in end elevation again with parts broken away to show the toothed or grooved aspect of the drive surface;

Figure 5 shows a scrap view in section of the gas-generating mechanism.

Figure 6 illustrates the compliant drive wheel arrangement for a pretensioner according to the invention;

Figure 7 illustrates another form of compliant drive wheel arrangement for a pretensioner according to the invention;

Figure 8 is an end elevation illustrating a pretensioner in accordance with the invention in which the pressure chamber axis is disposed in more than one plane; and

Figure 9 is a side drawn elevation of the pretensioner illustrated in Figure 8.

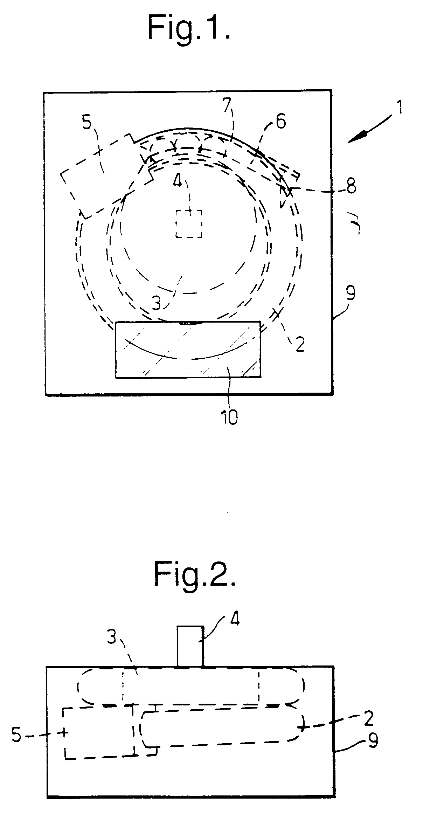

Referring firstly to Figure 1, the pretensioner illustrated generally at 1 comprises a curved pressure tube 2 which is coiled around a drive wheel 3 attached to a shaft 4. The pressure tube 2 is mounted eccentrically of the axis of the drive wheel 3 and has a diameter of curvature slightly greater than the wheel. The tube 2 has a closed end, at which there is situated a cap enclosing a gas-generating mechanism 5, and an open end which is cut back, as illustrated by the broken line 6, to form an open-sided channel 7. At the end of the channel 7 there is provided a projecting arrest member 8. As can be seen from Figure 2, the curved pressure tube 2 describes approximately 1½ turns about the drive wheel 3. The pretensioner is enclosed in a collection chamber 9, which may comprise the whole or part of the seat belt retractor housing, the chamber 9 having a clear panel 10 for viewing the interior thereof.

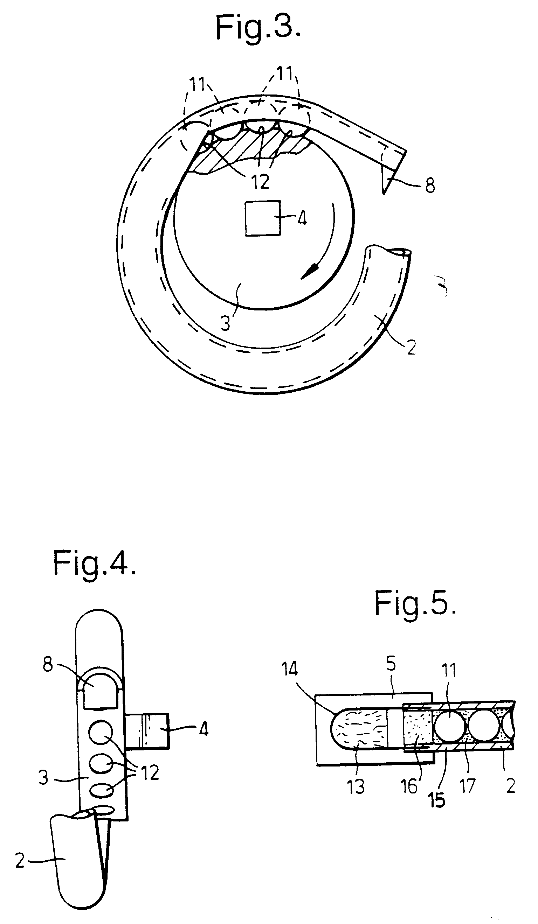

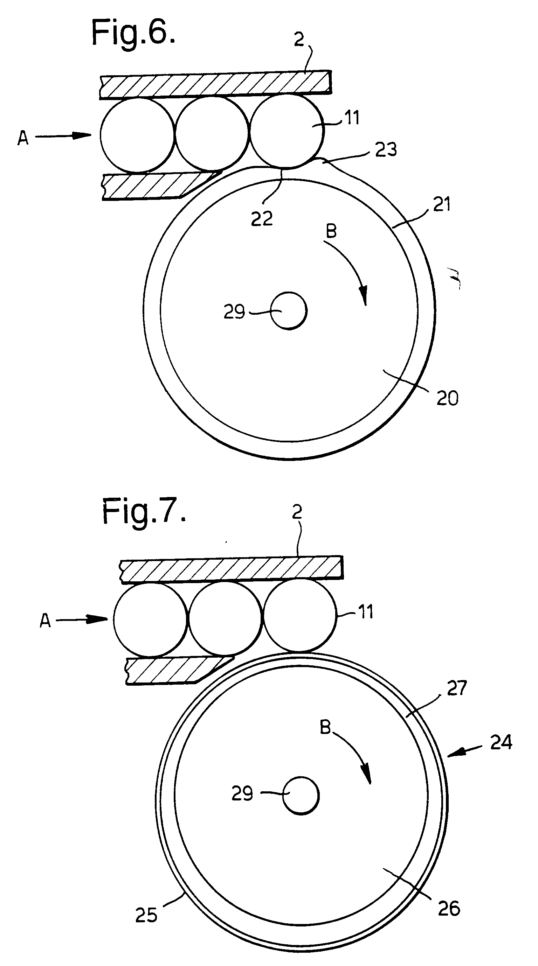

Referring now to Figure 6 which shows the pretensioner of the invention in operation. In this embodiment, the drive wheel 20 has a circumferential surface layer 21 of a compliant material. In use, balls 11 are propelled in the direction of the arrow A along a pressure tube 2 by means of pressure generated by a gas-generating mechanism 5, as described with reference to Figure 5.

When the balls encounter the surface layer 21, they are constrained between the wall of the tube 2 and the layer 21, so as to exert a radially inward pressure thereon as well as a forward pressure tending to rotate the wheel 20 in the direction of the arrow B.

The compliant material of the surface layer 21 thus deforms as illustrated so as to create an indentation 22 which receives a ball 11, and a lip 23 which resists free passage of the ball past the wheel. Each successive ball 11 thus drives the wheel 20 to rotate in the direction of the arrow B until rotation of the wheel enables the ball to escape, past the lip 23, and a subsequent ball 11 then repeats the cycle. The wheel 20 drives the take-up reel (not shown) via a shaft 29 on which the wheel is mounted.

The compliant layer in this embodiment should be soft enough to deform under the action of the balls 11 as illustrated, but needs relatively high shear strength so that the lip 23 dos not shear off under the load imposed by the balls 11. Suitable materials for the compliant layer are resilient materials such as polypropylene (especially UHMPE - ultra high modulus polyethylene), and reinforced rubber (e.g. fabric-reinforced).

As illustrated in Figure 7, a drive wheel 24 for use in the invention may comprises a circumferential surface layer 25 of rigid material such as steel or hard plastics material, and an inner hub zone 26 of a similar material. Sandwiched between the hub 26 and the circumferential layer 25 is an annular layer 27 of compliant material, which may be a material similar to that of the layer 21. In use, when the pretensioner is actuated, the balls 11 are driven in the direction of the arrow A into the space between the wall of the pressure tube 2 and the layer 25. This space is designed to be somewhat narrower then the diameter of the balls 11, so that the material 27 must deform in order to admit the balls into this space. A pressure load is thus created between the balls 11 and the layer 25 whereby successive balls drive the wheel 24 to rotate in the direction of the arrow B, until each successive ball escapes from the pinch between the rim 25 and the tube 2.

Referring now to Figure 3, which depicts one embodiment of the pretensioner in operation, a row of metal balls 11 are illustrated passing along the channel 7 of the pressure tube 2. There may be, for example, from 30 to 50 of such balls 11 in the pressure tube 2. The balls 11 have a diameter slightly less than the internal diameter of the tube 2 and are freely moveable therein. The compliant drive wheel 3 is provided with a series of circumferential indentations 12 about its periphery, which are spaced apart by a distance such that when adjacent balls 11 are located in the indentations the surfaces of adjacent balls are just touching. The arrangement is shown again in Figure 4 which also shows the drive shaft 4 which is attached to the take-up reel of a seat belt retractor (not shown).

Figure 5 shows a detail of the gas-generating mechanism 5. A pyrotechnic gas-generating composition 13 is packed into a pressure-resistant plug 14 firmly mounted at the end 15 of the pressure tube 2. The pyrotechnic composition 13 is ignited by an electronic igniter (not shown) which is activated by a deceleration sensor (not shown). A felt plug 16 is positioned at the end 15 of the pressure tube 2 and serves as a limit member for the travel of the row of balls 11.

In the rest, or inactive, position of the pretensioner, the balls 11 are confined within the pressure tube 2 by a rigid foam 17 which is injected into the pressure tube 2 after the balls have been inserted and which solidifies to retain the balls 11 in the pressure tube. The plug 16 prevents the foam from reacting the pyrotechnic composition. With the balls 11 retained in the tube 2, the drive wheel 3 and shaft 4 are able to rotate freely with the take-up reel of the seat belt retractor. The ball retaining means may alternatively comprise, for example, a frangible plug, or a spring means, which is compressed as the balls are ejected from the pressure tube.

In the event of a collision, the deceleration sensor activates the electronic igniter which in turn sets off the pyrotechnic gas-generating composition 13. The volume of gas generated by the composition 13 is sufficient to displace the felt plug 16, and propel the row of balls 11 at considerable speed along the pressure tube 2. The foam 17, of course, disintegrates as the balls are ejected from the pressure tube 2. When the balls reach the open channel 7 they come into contact with the indentations 12 on the drive wheel 3 and cause the drive wheel 3 and drive shaft 4 to rotate at high speed. The drive shaft rotates the take-up reel of the seat belt retractor causing retraction of the seat belt by the desired amount.

The path of the balls is tangential to the circumference of the drive wheel 3 and as they fly off they each come into contact with the arrest member 8 at the end of the open channel 7 and suffer a substantial deceleration. This prevents the balls from damaging the wall of the collection chamber 9. The pretensioner is preferably enclosed within the housing of the seat belt retractor, which comprises the collection chamber 9, and as the balls are ejected from the open channel 7, they collect in the bottom of the housing from where they can be viewed through the clear panel 10 to provide a visual check on whether the pretensioner has been activated. After use, they can be recovered and reused with a fresh charge of pyrotechnic composition as appropriate.

After the last ball has left the periphery of the drive wheel 3 there is no further force acting on the drive wheel which is then locked in position by the seat belt retractor lock. When the vehicle has come to a halt, the seat belt retractor lock is released and the seat belt can again be used normally. The projectiles 11 are by this stage clear of the drive surface and thus do not interfere in any way with such normal use.

The embodiments illustrated in Figures 6 and 7 have a homogeneous circumference, i.e. without individual teeth or recesses for receiving individual balls separately. This has the considerable advantage that the balls 11 can engage readily with the drive surface of the drive wheel in each case, without the risk that a ball, especially the first ball, may encounter the drive surface at a location between two individual teeth or recesses which could cause jamming or damage to the mechanism.

In addition, a further considerable advantage is that the tension load which the device can apply to a seat belt is limited by the maximum torque which can be applied between the balls and the drive wheel. If this maximum is exceeded, the balls simply escape from the pinch between the drive wheel and the pressure tube in each of these embodiments. This provides a further safety feature in that the user is protected against the possibility of excessive tightening of the belt and the output torque of the wheel is independent of the maximum pressure produced by the gas generator.

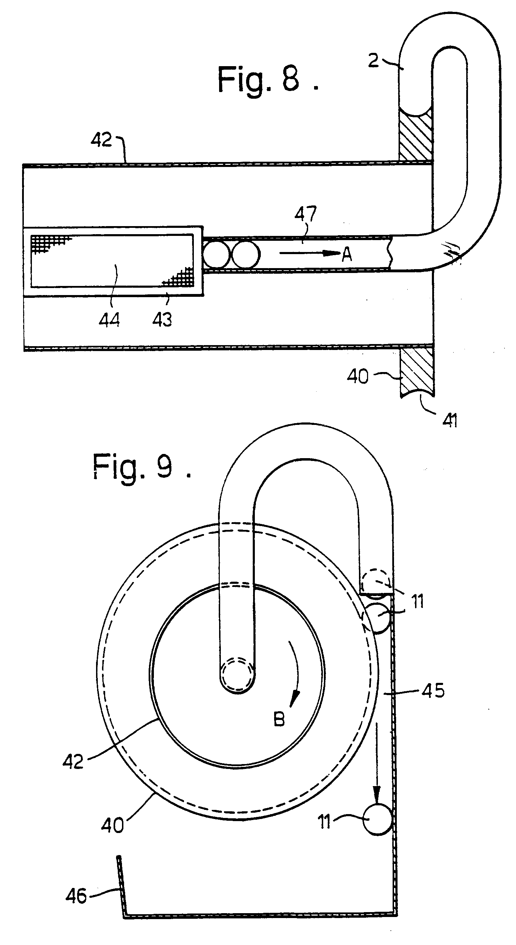

As shown in Figures 8 and 9, a drive wheel 40 is formed of a compliant material (for example UHMPE) and has a continuous part-circular-section groove 41 formed in its periphery for receiving balls 22. The wheel 40 is mounted on a take-up reel 42 of a seat belt retractor.

A gas generator 43 containing pyrotechnic material 44 is housed within the reel 42, together with the first section 44 of an elongate tube of circular cross-section 44 of an elongate tube of circular cross-section which constitutes the pressure chamber 2. The tubular pressure chamber 2 is bent so as to pass radially outward from the reel and then back on itself so as partially to embrace the circumference of the drive wheel. Balls 11 (only two are shown for clarity) are driven, upon actuation of the gas generator 44, in the direction of the arrow A, so as to pass into the pinch between the rim 41 and the open end 45 of the tube 2, so as to drive the wheel 40 and the reel 42, to rotate in the direction of the arrow B, in similar manner to the embodiment of Figure 6. The used balls 11 are collected in a receptacle 46.

The combination of spherical projectiles 11 in a circular-section tube, the projectiles not being connected to each other, permits that the pressure tube is strong in resisting the pressure of the gas generator, and can be bent into three-dimensional shapes while the individual balls have no restriction on their relative articulation which limits the shape which can be adopted for the tube 2. Thus the gas generator 43 can be located inside the reel 42, together with part of the pressure tube 2. This space would otherwise not be used, and the overall bulk of the pretensioner is thus substantially less than would otherwise be the case.

All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A pretensioner (1) for a vehicle seat belt retractor of the type having a rotatable take-up reel on which seat belt webbing can be wound, comprising:

   (i) an elongate pressure chamber (2);

   (ii) a plurality of projectiles (11) located in the pressure chamber;

   (iii) gas generating means (5) for generating a high pressure gas within the pressure chamber;

   (iv) a drive surface (12, 21, 25, 34, 41) upon which the projectiles impinge when acted upon by the high pressure gas, the drive surface being connected to, or comprising a part of, a rotatable take-up reel (2) of a vehicle seat belt retractor and arranged to be driven by the impinging projectiles (11) so as to rotate the rotatable take-up reel in a belt retraction direction when impinged upon by the projectiles, so as, in operation, to take up slack in the seat belt webbing, and to pull the seat belt webbing against the vehicle occupant;

   characterised in that; the drive wheel comprises compliant material (21; 27; 40) deformable by pressure contact between the drive surface and a projectile such that, when pressure contact occurs, the shortest distance from the point of contact of the projectile on the drive surface to the central axis of the drive wheel is reduced.

2. A pretensioner for a vehicle as claimed in claim 1 characterised in that the drive wheel comprises at least a circumferential surface layer (21) of compliant material.

3. A pretensioner for a vehicle as claimed in claim 1 characterised in that the drive wheel comprises a circumferential surface layer (25) of rigid material, and radially inwards thereof an annular layer (27) of compliant material.

4. A pretensioner for a vehicle as claimed in any preceding claim characterised in that the drive wheel comprises a circumferential channel (34) having resiliently deformable channel sides (33), the spacing of the channel sides being such that a projectile (11) can be received therebetween only by deforming the channel sides (33).

5. A pretensioner for a vehicle as claimed in claim 4 in which the channel sides (33) are spring biased towards each other.

6. A pretensioner for a vehicle as claimed in any preceding claim characterised in that the drive surface comprises a circumferential surface (12, 21, 25, 34, 41) of a drive wheel which is connected to, or comprises part of, a rotatable take-up reel (42) of a vehicle seat belt retractor.

7. A pretensioner for a vehicle as claimed in any preceding claim characterised in that the drive surface is indented, toothed grooved, or otherwise shaped, to accept partial intrusion by projectiles.

8. A pretensioner for a vehicle as claimed in claim 7 characterised in that the drive surface is formed with recesses (12) each of which is adapted to receive a single projectile.

9. A pretensioner according to any one of the preceding claims, characterised in that, in operation, the projectiles (11) impinge tangentially against the drive surface (12, 21, 25, 34, 41).

10. A pretensioner according to any one of the preceding claims characterised in that the pressure chamber comprises an elongate tube (2) of circular cross-section.

11. A pretensioner as claimed in claim 10 characterised in that the tube (2) has an open end arranged in a tangential direction to the drive surface.

12. A pretensioner as claimed in claim 10 or claim 11 characterised in that the tube terminates in an open channel (7), which, in operation, directs the projectiles against the drive surface.

13. A pretensioner as claimed in claim 12 characterised in that the open channel (7) is provided with a terminal arrest member (8,36), positioned so as, in operation, to slow down the projectiles (11) after they have left the drive surface.

14. A pretensioner according to any one of the preceding claims characterised in that the number of projectiles (11) is sufficient to rotate the take-up reel of the seat belt retractor by between one and a half and three times during the activation of the pretensioner.

15. A pretensioner according to any one of the preceding claims which comprises at least 30 projectiles (11).

16. A pretensioner according to claim 15 which comprises not more than 50 projectiles (11).

17. A pretensioner according to any one of the preceding claims characterised in that the projectiles (11) are not connected to one another.

18. A pretensioner according to any one of the preceding claims characterised in that the projectiles (11) are spherical in form.

19. A pretensioner as claimed in claim 18 characterised in that the spherical projectiles (11) are arranged in a row in an elongate pressure tube (2) and the diameter of the projectiles (11) is such as to occupy substantially the entire diameter of the tube (2) whilst allowing the projectiles to travel freely therein.

20. A pretensioner as claimed in claim 19 characterised in that the elongate pressure tube (2) comprises an arcuate portion which curves partly or wholly around the drive surface.

21. A pretensioner as claimed in claim 19 or claim 20 characterised in that the axis of the elongate tube is disposed in more than one plane.

22. A pretensioner as claimed in claim 21 characterised in that at least part of the elongate tube (2) is of helical form.

23. A pretensioner as claimed in claim 21 or claim 22 characterised in that part of the elongate tube (2) is disposed within the take-up reel (42).

24. A pretensioner as claimed in any one of claims 21 to 23 characterised in that the gas generating means (43) are at least partly disposed within the take-up reel (42).

25. A pretensioner according to any one of the preceding claims, in which a gas generating composition (13) is disposed within the pressure chamber (2).

26. A pretensioner according to any one of the preceding claims in which the gas generating composition (13) comprises a pyrotechnic composition.

27. A pretensioner according to any one of the preceding claims in which retaining means (17) are provided to retain the projectiles (11) within the pressure chamber (2) prior to activation of the pretensioner.

28. A pretensioner as claimed in claim 27 in which the retaining means comprises a rigid foam (17) which is injected into the pressure chamber (2) after the projectiles (11) have been inserted therein and which solidifies to retain the projectiles in the pressure chamber.

29. A pretensioner for a vehicle as claimed in any one of the preceding claims characterised in that it is provided with a collection chamber (9; 35; 46), which in operation, is adapted to receive the projectiles (11) after they have impinged on the drive surface.

30. A pretensioner for a vehicle as claimed in claim 29 characterised in that the collection chamber is at least partly transparent (10) to enable the ejected projectiles to be viewed.

31. A pretensioner according to any one of the preceding claims in which the projectiles (11), after operation of the pretensioner, are positioned such that they provide no impediment or obstacle to the normal operation of the seat belt.

32. A seat belt retractor provided with a pretensioner according to any one of claims 1-31.

33. A seat belt retractor as claimed in claim 32, in which, in operation, the action of the seat belt pretensioner rotates the take-up reel of the seat belt retractor by from 1 to 3 times within a period of 20 milliseconds.

34. A seat belt retractor as claimed in claim 32 or claim 33 in which in operation, the pretensioner is adapted to wind from 120 to 200 mm of seat belt.

**Patentansprüche**

1. Gurtstraffer (1) für einen Fahrzeugsicherheitsgurt-Aufroller der Bauart mit einer drehbaren Aufwickelrolle, auf welcher der Gurt aufgewickelt werden kann, mit:

    i) einer länglichen Druckkammer (2),

    ii) eine Mehrzahl von in der Druckkammer positionierten Projektilen (11),

    iii) einem Gaserzeuger (5) zur Erzeugung eines Hochdruckgases innerhalb der Druckkammer,

    iv) eine Antriebsfläche (12, 21, 25, 34, 41), auf welche die Projektile auftreffen, wenn sie durch das Hochdruckgas betätigt werden, wobei die Antriebsfläche mit der drehbaren Aufwickelrolle (2) eines Fahrzeugsicherheitsgurt-Aufrollers verbunden ist bzw. einen Teil davon bildet und so angeordnet ist, daß sie durch die auftreffenden Projektile (11) im Sinne einer Drehung der drehbaren Aufwickelrolle in Gurtaufrollrichtung angetrieben wird, wenn die Projektile auf sie auftreffen, so daß im Betrieb loses Gurtspiel aufgenommen und der Sicherheitsgurt gegen den Fahrzeuginsassen gestrafft wird,
dadurch gekennzeichnet, daß das Antriebsrad nachgiebiges Material (21, 27, 40) aufweist, das durch Druckkontakt zwischen der Antriebsfläche und einem Projektil derart verformbar ist, daß, wenn der Druckkontakt auftritt, die kürzeste Distanz von der Kontaktstelle des Projektils auf der Antriebsfläche zur Mittelachse des Antriebsrads verringert wird.

2. Fahrzeug-Gurtstraffer nach Anspruch 1, dadurch gekennzeichnet, daß das Antriebsrad mindestens eine umfangsmäßige Oberflächenschicht (21) aus nachgiebigem Material aufweist.

3. Fahrzeug-Gurtstraffer nach Anspruch 1, dadurch gekennzeichnet, daß das Antriebsrad eine umfangsmäßige Oberflächenschicht (25) aus steifem Material und radial innerhalb davon eine ringförmige Schicht (27) aus nachgiebigem Material aufweist.

4. Fahrzeug-Gurtstraffer nach einem der vorhergehenden Ansprüche, dadurch gekennzeichnet, daß das Antriebsrad eine ringförmige Nut (34) mit elastisch verformbaren Nutseitenwänden (33) aufweist, wobei der Abstand der Nutseitenwände derart ist, daß ein Projektil (11) zwischen ihnen nur durch Verformung der Kanalseitenwände (33) aufgenommen werden kann.

5. Fahrzeug-Gurtstraffer nach Anspruch 4, wobei die Nutseitenwände (33) zueinander hin federnd vorgespannt sind.

6. Fahrzeug-Gurtstraffer nach einem der vorhergehendem Ansprüche, dadurch gekennzeichnet, daß die Antriebsfläche eine Umfangsfläche (12, 21, 25, 34, 41) eines Antriebsrads umfaßt, das mit der drehbaren Aufwickelrolle 42 eines Fahrzeugsicherheitsgurt-Aufrollers verbunden ist oder einen Teil davon bildet.

7. Fahrzeug-Gurtstraffer nach einem der vorhergehenden Ansprüche, dadurch gekennzeichnet, daß die Antriebsfläche mit Vertiefungen oder Verzahnungsnuten versehen oder auf andere Weise geformt ist, um ein teilweises Eindringen von Projektilen zu ermöglichen.

8. Fahrzeug-Gurtstraffer nach Anspruch 7, dadurch gekennzeichnet, daß die Antriebsfläche mit Aussparungen (12) versehen ist, die jeweils zur Aufnahme eines einzigen Projektils ausgebildet sind.

9. Gurtstraffer nach einem der vorhergehenden Ansprüche, dadurch gekennzeichnet, daß die Projektile (11) im Betrieb tangential auf die Antriebsfläche (12, 21, 25, 34, 41) auftreffen.

10. Gurtstraffer nach einem der vorhergehenden Ansprüche, dadurch gekennzeichnet, daß die Druckkammer ein längliches Rohr (2) mit kreisförmigem Querschnitt aufweist.

11. Gurtstraffer nach Anspruch 10, dadurch gekennzeichnet, daß das Rohr (2) ein offenes Ende aufweist, das in tangentialer Richtung mit Bezug auf die Antriebsfläche angeordnet ist.

12. Gurtstraffer nach Anspruch 10 oder 11, dadurch gekennzeichnet, daß das Rohr in einem offenen Kanal (7) endigt, der im Betrieb die Projektile gegen die Antriebsfläche leitet.

13. Gurtstraffer nach Anspruch 12, dadurch gekennzeichnet, daß der offene Kanal (7) mit einem derart positionierten Endarretierglied (8, 36) versehen ist, daß im Betrieb die Projektile (11) nach Verlassen der Antriebsfläche verlangsamt werden.

14. Gurtstraffer nach einem der vorhergehenden Ansprüche, dadurch gekennzeichnet, daß die Anzahl der Projektile (11) ausreichend groß ist, um die Aufwickelrolle des Gurtaufrollers während der Aktivierung des Gurtstraffers mit eineinhalb bis drei Umdrehungen zu drehen.

15. Gurtstraffer nach einem der vorhergehenden Ansprüche, der mindestens 30 Projektile (11) aufweist.

16. Gurtstraffer nach Anspruch 15, der nicht mehr als 50 Projektile (11) aufweist.

17. Gurtstraffer nach einem der vorhergehenden Ansprüche, dadurch gekennzeichnet, daß die Projektile (11) nicht miteinander verbunden sind.

18. Gurtstraffer nach einem der vorhergehenden Ansprüche, dadurch gekennzeichnet, daß die Projektile (11) kugelförmig sind.

19. Gurtstraffer nach Anspruch 18, dadurch gekennzeichnet, daß die kugeligen Projektile (11) in einer Reihe in einem länglichen Druckrohr (2) angeordnet sind und der Durchmesser der Projektile (11) so gewählt ist, daß er im wesentlichen den gesamten Durchmesser des Rohrs (2) ausfüllt, wobei jedoch die Projektile darin frei bewegbar sind.

20. Gurtstraffer nach Anspruch 19, dadurch gekennzeichnet, daß das längliche Druckrohr (2) einen gebogenen Teil aufweist, der ganz oder teilweise um die Antriebsfläche herum verläuft.

21. Gurtstraffer nach Anspruch 19 oder 20, dadurch gekennzeichnet, daß die Achse des länglichen Rohrs in mehr als einer Ebene verläuft.

22. Gurtstraffer nach Anspruch 21, dadurch gekennzeichnet, daß mindestens ein Teil des länglichen Rohrs (2) Schraubenlinienform hat.

23. Gurtstaffer nach Anspruch 21 oder 22, dadurch gekennzeichnet, daß ein Teil des länglichen Rohrs (2) innerhalb der Aufwickelrolle (22) verläuft.

24. Gurtstraffer nach einem der Ansprüche 21 bis 23, dadurch gekennzeichnet, daß der Gaserzeuger (43) mindestens teilweise innerhalb der Aufwickelrolle (42) angeordnet ist.

25. Gurtstraffer nach einem der vorhergehenden Ansprüche, wobei eine Gaserzeugungszusammensetzung (13) innerhalb der Druckkammer (2) angeordnet ist.

26. Gurtstraffer nach einem der vorhergehenden Ansprüche, wobei die Gaserzeugungszusammensetzung (13) eine pyrotechnische Zusammensetzung ist.

27. Gurtstraffer nach einem der vorhergehenden Ansprüche, wobei Rückhaltemittel (17) vorgesehen sind, um die Projektile (11) vor der Aktivierung des Gurtstraffers innerhalb der Druckkammer (2) zu halten.

28. Gurtstraffer nach Anspruch 27, wobei die Rückhaltemittel einen steifen Schaum (17) umfassen, der nach Einführen der Projektile (11) in die Druckkammer (2) eingespritzt und verfestigt ist, um die Projektile in der Druckkammer zu halten.

29. Fahrzeug-Gurtstraffer nach einem der vorhergehenden Ansprüche, dadurch gekennzeichnet, daß er mit einer Sammelkammer (9, 35, 46) versehen ist, die im Betrieb die Projektile (11) nach deren Auftreffen auf die Antriebsfläche aufnimmt.

30. Fahrzeug-Gurtstraffer nach Anspruch 29, dadurch gekennzeichnet, daß die Sammelkammer mindestens teilweise transparent (10) ist, damit die ausgeworfenen Projektile sichtbar sind.

31. Gurtstraffer nach einem der vorhergehenden Ansprüche, wobei die Projektile (11) nach Betätigung des Gurtstraffers so positioniert sind, daß sie keine Behinderung oder Blockierung des normalen Betriebs des Sicherheitsgurts bilden.

32. Sicherheitsgurtaufroller mit einem Gurtstraffer nach einem der Ansprüche 1 bis 31.

33. Sicherheitsgurtaufroller nach Anspruch 32, bei welchem im Betrieb die Wirkung des Gurtstraffers die Aufwickelrolle des Gurtaufrollers innerhalb einer Periode von 20 Millisekunden mit ein bis drei Umdrehungen gedreht wird.

34. Sicherheitsgurtaufroller nach Anspruch 32 oder 33, bei welchem der Gurtstraffer dafür ausgelegt ist, im Betrieb 120 bis 200 Millimeter Gurtlänge aufzuwickeln.

**Revendications**

1. Organe (1) de tension préalable destiné à un enrouleur de ceinture de sécurité pour siège de véhicule, du type possédant un rouleau récepteur rotatif sur lequel une sangle de ceinture de sécurité peut être enroulée, et comprenant :

(i) une chambre allongée (2) de pression,

(ii) plusieurs projectiles (11) placés dans la chambre de pression,

(iii) un dispositif générateur de gaz (5) destiné à créer un gaz à haute pression dans la chambre de pression, et

(iv) une surface d'entraînement (12, 21, 25, 34, 41) que viennent frapper les projectiles lorsqu'ils subissent l'action du gaz à haute pression, la surface d'entraînement étant raccordée à un rouleau rotatif de prélèvement (2) d'un enrouleur de ceinture de sécurité de véhicule ou formant une partie de ce rouleau, et étant disposée afin qu'elle soit entraînée par la frappe des projectiles (11) et fasse tourner le rouleau rotatif de prélèvement dans le sens d'enroulement de la ceinture lors de la frappe par les projectiles si bien que, pendant le fonctionnement, le jeu de la sangle de ceinture de sécurité est encaissé et la sangle de ceinture de sécurité est tirée sur l'occupant du véhicule, caractérisé en ce que la roue d'entraînement comprend un matériau élastique (21 ; 27 ; 40) déformable par contact sous pression entre la surface d'entraînement et un projectile afin que, lorsqu'un contact sous pression se produit, la distance la plus courte à partir du point de contact du projectile à la surface d'entraînement jusqu'à l'axe central de la roue d'entraînement soit réduite.

2. Organe de tension préalable pour véhicule selon la revendication 1, caractérisé en ce que la roue d'entraînement comporte au moins une couche circonférentielle (21) de surface d'un matériau souple.

3. Organe de tension préalable pour véhicule selon la revendication 1, caractérisé en ce que la roue d'entraînement comprend une couche circonférentielle (25) de surface formée d'un matériau rigide, et en direction radiale vers l'intérieur, une couche annulaire (27) d'un matériau souple.

4. Organe de tension préalable pour véhicule selon l'une quelconque des revendications précédentes, caractérisé en ce que la roue d'entraînement comprend un canal circonférentiel (34) ayant des côtés de canal (33) qui sont élastiquement déformables, l'espacement des côtés du canal étant tel qu'un projectile (11) peut être logé entre eux uniquement par déformation des côtés (33) du canal.

5. Organe de tension préalable pour véhicule selon la revendication 4, dans lequel les cotés (33) du canal sont rappelés élastiquement l'un vers l'autre.

6. Organe de tension préalable pour véhicule selon l'une quelconque des revendications précédentes, caractérisé en ce que la surface d'entraînement comporte une surface circonférentielle (12, 21, 25, 34, 41) d'une roue d'entraînement qui est raccordée à un rouleau rotatif (42) de prélèvement d'enrouleur de sangle de ceinture de sécurité de véhicule ou qui fait partie d'un tel rouleau.

7. Organe de tension préalable pour véhicule selon l'une quelconque des revendications précédentes, caractérisé en ce que la surface d'entraînement a des cavités, des gorges dentées ou une autre forme analogue pour l'acceptation des projectiles qui pénètrent partiellement.

8. Organe de tension préalable pour véhicule selon la revendication 7, caractérisé en ce que la surface d'entraînement est réalisée avec des cavités (12) destinées chacune à loger un seul projectile.

9. Organe de tension préalable selon l'une quelconque des revendications précédentes, caractérisé en ce que, pendant le fonctionnement, des projectiles (11) frappent tangentiellement la surface d'entraînement (12, 21, 25, 34, 41).

10. Organe de tension préalable selon l'une quelconque des revendications précédentes, caractérisé en ce que la chambre de pression comporte un tube allongé (2) de section circulaire.

11. Organe de tension préalable selon la revendication 10, caractérisé en ce que le tube (2) a une extrémité ouverte ayant une direction tangente à la surface d'entraînement.

12. Organe de tension préalable selon la revendication 10 ou 11, caractérisé en ce que le tube aboutit à un canal ouvert (7) qui, pendant le fonctionnement, dirige les projectiles contre la surface d'entraînement.

13. Organe de tension préalable selon la revendication 12, caractérisé en ce que le canal ouvert (7) a un organe terminal (8, 36) d'arrêt disposé afin que, pendant le fonctionnement, il ralentisse les projectiles (11) après qu'ils ont quitté la surface d'entraînement.

14. Organe de tension préalable selon l'une quelconque des revendications précédentes, caractérisé en ce que le nombre de projectiles (11) est suffisant pour faire tourner le rouleau de prélèvement de l'enrouleur de ceinture de sécurité entre une fois et demie et trois fois pendant l'activation de l'organe de tension préalable.

15. Organe de tension préalable selon l'une quelconque des revendications précédentes, qui comporte au moins trente projectiles (11).

16. Organe de tension préalable selon la revendication 15, qui comprend au plus cinquante projectiles (11).

17. Organe de tension préalable selon l'une quelconque des revendications précédentes, caractérisé en ce que les projectiles (11) ne sont pas raccordés mutuellement.

18. Organe de tension préalable selon l'une quelconque des revendications précédentes, caractérisé en ce que les projectiles (11) ont une forme sphérique.

19. Organe de tension préalable selon la revendication 18, caractérisé en ce que les projectiles sphériques (11) sont disposés en ligne dans un tube allongé (2) de pression et le diamètre des projectiles (11) est tel qu'il occupe pratiquement tout le diamètre du tube (2) tout en permettant un passage libre des projectiles à l'intérieur.

20. Organe de tension préalable selon la revendication 19, caractérisé en ce que le tube allongé (2) de pression possède une partie courbe qui est courbée partiellement ou totalement autour de la surface d'entraînement.

21. Organe de tension préalable selon la revendication 19 ou 20, caractérisé en ce que l'axe du tube allongé est placé dans plus d'un plan.

22. Organe de tension préalable selon la revendication 21, caractérisé en ce qu'une partie au moins du tube allongé (2) a une forme d'hélice.

23. Organe de tension préalable selon la revendication 21 ou 22, caractérisé en ce qu'une partie du tube allongé (2) est disposée à l'intérieur du rouleau (42) de prélèvement.

24. Organe de tension préalable selon l'une quelconque des revendications 21 à 23, caractérisé en ce que le dispositif générateur de gaz (43) est au moins partiellement disposé à l'intérieur du rouleau de prélèvement (42).

25. Organe de tension préalable selon l'une quelconque des revendications précédentes, dans lequel une composition génératrice de gaz (13) est placée à l'intérieur de la chambre de pression (2).

26. Organe de tension préalable selon l'une quelconque des revendications précédentes, dans lequel la composition génératrice de gaz (13) est une composition pyrotechnique.

27. Organe de tension préalable selon l'une quelconque des revendications précédentes, dans lequel un dispositif de retenue (17) est destiné à retenir les projectiles (11) dans la chambre de pression (2) avant l'activation de l'organe de tension préalable.

28. Organe de tension préalable selon la revendication 27, dans lequel le dispositif de retenue comprend une mousse rigide (17) qui est injectée dans la chambre de pression (2) après que les projectiles (11) ont été insérés à l'intérieur et qui se solidifie pour retenir les projectiles dans la chambre de pression.

29. Organe de tension préalable pour véhicule selon l'une quelconque des revendications précédentes, caractérisé en ce qu'il comprend une chambre collectrice (9 ; 35 ; 46) qui, pendant le fonctionnement, est destinée à recevoir les projectiles (11) après qu'ils ont frappé la surface d'entraînement.

30. Organe de tension préalable pour véhicule selon la revendication 29, caractérisé en ce que la chambre collectrice est au moins partiellement transparente (10) afin qu'elle permette l'observation des projectiles éjectes.

31. Organe de tension préalable selon l'une quelconque des revendications précédentes, dans lequel les projectiles (11) , après le fonctionnement de l'organe de tension préalable, sont disposés afin qu'ils ne créent aucune gêne ni aucun obstacle au fonctionnement normal de la ceinture de sécurité.

32. Enrouleur de ceinture de sécurité muni d'un organe de tension préalable selon l'une quelconque des revendications 1 à 31.

33. Enrouleur de ceinture de sécurité selon la revendication 32, dans lequel, au cours du fonctionnement, l'action de l'organe de tension préalable de ceinture de sécurité fait tourner le rouleau de prélèvement de l'enrouleur de ceinture de sécurité d'une à trois fois pendant une période de 20 ms.

34. Enrouleur de ceinture de sécurité selon la revendication 32 ou 33, dans lequel, pendant le fonctionnement, l'organe de tension préalable est destiné à enrouler la sangle de ceinture de sécurité de 120 à 200 mm.

# Fig.1.

# Fig.2.

# Fig.3.

# Fig.4.

# Fig.5.

## Fig.6.

## Fig.7.

Fig. 8 .

Fig. 9 .